# EUROPÄISCHE PATENTANMELDUNG

(11) **EP 4 152 536 A1**
(43) Veröffentlichungstag der Anmeldung: **22.03.2023**
(21) Anmeldenummer: 22194525.6
(22) Anmeldetag: 08.09.2022
(51) Int. Cl.: H02G 3/04, H02G 3/08, H02G 3/12

(54) **INSTALLATIONSDOSE**

(30) Priorität: 17.09.2021 DE 202021105015 U
(71) Anmelder: OBO Bettermann Hungary Kft., 2347 Bugyi (HU)
(72) Erfinder: Harms, Heiko, 58708 Menden (DE); Kolert, Sergej, 58119 Hagen (DE)
(74) Vertreter: Haverkamp Patentanwälte PartG mbB

(57) **Zusammenfassung**

Die Erfindung betrifft eine Installationsdose zum Installieren von elektrischen und/oder elektronischen Komponenten, umfassend einen Dosenkörper 2 mit einem Boden 4 und einer umlaufenden Seitenwand 5 sowie eine von der Seitenwand 5 eingefassten Montageöffnung 7, welche Seitenwand 5 innenseitig mehrere, sich in Richtung der Tiefe des Dosenkörpers erstreckende, rippenartige Dosenvorsprünge trägt, wobei die Installationsdose 1, 1.1, 1.2 ferner über zumindest einen Intumeszenzeinsatz 3 mit einem lagigen Aufbau, bereitgestellt durch einen Intumeszenzträger 16 als erste Lage und daran an einer Seite angeschlossenes Intumeszenzmaterial 17 als weitere Lage, verfügt, der dem innenseitigen Seitenwandverlauf in Umfangsrichtung des Dosenkörpers 2 folgt, wobei sich der Intumeszenzträger 16 dosenkörperinnenseitig und das Intumeszenzmaterial 17 an der zur Seitenwand 5 des Dosenkörpers 2 weisenden Seite des Intumeszenzträgers 16 befinden. Besonderes Kennzeichen ist, dass der oder die Intumeszenzeinsätze 3 jeweils zwischen zwei in Umfangsrichtung voneinander beabstandeten Dosenvorsprüngen 11, 13 angeordnet sind, und dass der zumindest eine Intumeszenzeinsatz 3 dergestalt in dem Dosenkörper 2 positioniert ist, dass an seinem in Richtung zum Boden des Dosenkörpers 2 weisenden Ende zwischen dem Intumeszenzträger 16 und dem Dosenkörper 2 zumindest abschnittsweise eine oder mehrere Austrittsöffnungen 20 vorhanden sind und/oder in dem Intumeszenzträger begrenzt auf einen sich in Richtung der Tiefe des Dosenkörpers erstreckenden Abschnitt eine oder mehrere Austrittsöffnungen 20 vorgesehen sind.

## Beschreibung

Die Erfindung betrifft eine Installationsdose zum Installieren von elektrischen und/oder elektronischen Komponenten, umfassend einen Dosenkörper mit einem Boden und einer umlaufenden Seitenwand sowie eine von der Seitenwand eingefassten Montageöffnung, welche Seitenwand innenseitig mehrere, sich in Richtung der Tiefe des Dosenkörpers erstreckende, rippenartige Dosenvorsprünge trägt, wobei die Installationsdose ferner über zumindest einen Intumeszenzeinsatz mit einem lagigen Aufbau, bereitgestellt durch einen Intumeszenzträger als erste Lage und daran an einer Seite angeschlossenes Intumeszenzmaterial als weitere Lage, verfügt, der dem innenseitigen Seitenwandverlauf in Umfangsrichtung des Dosenkörpers folgt, wobei sich der Intumeszenzträger dosenkörperinnenseitig und das Intumeszenzmaterial an der zur Seitenwand des Dosenkörpers weisenden Seite des Intumeszenzträgers befinden.

Installationsdosen werden für die Installation von elektrischen und/oder elektronischen Komponenten in Gebäuden eingesetzt. Derartige Installationsdosen können als Hohlwanddosen ausgebildet sein. Derartige Installationsdosen verfügen über einen Dosenkörper, der durch einen Boden, eine umlaufende Wand und eine dem Boden gegenüberliegende Montageöffnung gebildet ist. Die Montageöffnung stellt diejenige Öffnung des Dosenkörpers dar, durch die die elektrischen/elektronischen Geräte darin eingesetzt werden. Auch wird über die Montageöffnung die Verkabelung innerhalb der Installationsdose und somit zu den von dieser abgehenden Leitungen vorgenommen. Als elektrische/elektronische Installationsgeräte kommen Steckdosen, Geräteträger, elektrische/ elektronische Schaltgeräte, wie beispielsweise Dimmer oder dergleichen in Frage. An den Dosenkörper ist an seinen die Montageöffnung einfassenden Wandabschnitt ein in radialer Richtung nach außen vorspringender Stützflansch angeformt. Dieser dient zur Begrenzung der Einsetztiefe der Hohlwanddose, wenn diese in ein in eine Gebäudewand angebrachtes Dosenloch eingesetzt wird. Festgesetzt wird eine solche als Hohlwanddose ausgeführte Installationsdose in der wandseitigen Dosenöffnung mittels in radialer Richtung ausstellbarer Klemmkörper.

In dem Dosenkörper der Installationsdose sind Installationsöffnungen vorgesehen. Diese dienen zum Einführen eines Verbindungsrohrstückes typischerweise vom Dosenkörperinneren her, um eine erste Installationsdose mit einer zweiten unter Bereitstellung eines Verbindungstunnels miteinander zu verbinden. Das Verbindungsrohrstück verfügt über einen Anschlagflansch, mit dem dieser an dem Lochrandbereich der Installationsöffnung anliegt, wenn das Verbindungsrohrstück weit genug durch die Installationsöffnung hindurchgeführt ist. Derartige auch als Einführöffnungen angesprochene Installationsöffnungen dienen auch für die Kabelein- und -ausführung.

Derartige als Hohlwanddosen ausgelegte Installationsdosen werden vielfach in Trockenbauwänden verbaut. Bei einem solchen Anwendungsfall ist gefordert, dass die durch die Wand bereitgestellte Luftdichtigkeit zwischen zwei Räumen oder sogar zur Außenhaut des Gebäudes durch den Einbau von derartigen Installationsdosen, wenn diese von gegenüberliegenden Seiten in eine solche Trockenbauwand eingesetzt werden, nicht nachteilig beeinflusst wird. Bei Installationsdosen, bei denen es nicht auf eine Luft- und Rauchdichtigkeit ankommt, können die Installationsöffnungen durch Ausbrechteile vorbereitet sein. Bei diesen Ausbrechteilen handelt es sich um Kunststoffteile aus demselben Material wie der Dosenkörper selbst, und zwar Hartkunststoff, die mit Abbrechstegen mit dem eine solche Installationsöffnung umgebenden Material des Dosenkörpers verbunden sind. Je nach Bedarf werden dann die erforderlichen Installationsöffnungen durch Ausbrechen eines solchen Ausbrechteils geöffnet. Bei luftdicht ausgeführten Installationsdosen ist jede Installationsöffnung mit einer Weichkunststoffmembran verschlossen, die von einem einzuführenden Kabel oder Rohr durchstoßen werden kann oder vor einer solchen Montage herausgetrennt wird.

Wenn eine solche Installationsdose die Eigenschaft einer Brandschutzdose erfüllen soll, kann in diese ein Inneneinsatz, wie in DE 20 2017 105 736 U1 beschrieben, der zumindest teilweise aus einem intumeszierenden Material besteht, eingesetzt werden. Bei diesem Inneneinsatz handelt es sich um eine Innendose, die außenseitig das Intumeszenzmaterial trägt. Dieses befindet sich sodann zwischen einem Intumeszenzträger und dem Dosenkörper der Installationsdose. Dieser Intumeszenzeinsatz ist damit als Schichtkörper mit einem lagigen Aufbau konzipert, wobei der Intumeszenzträger eine erste Lage und das Intumeszenzmaterial eine weitere Lage bilden. Der Intumeszenzträger enthält kein Intumeszenzmaterial. Damit Rohreinführungen genutzt werden können, verfügt der Doseneinsatz ebenso wie der Dosenkörper selbst an denjenigen Stellen über mit einer Weichkunststoffmembran überspannte Einführöffnungen, die mit denjenigen des Dosenkörpers fluchten. Bei einer solchen vorbekannten, als Brandschutzdose ausgelegten Installationsdose weist das Intumeszenzmaterial eine Reaktionstemperatur von etwa 200°C auf. Wird diese Temperatur überschritten, reagiert das Intumeszenzmaterial und bläht sich je nach eingesetztem Material bis zum 20- bis 40-fachen seines Volumens auf. Durch das in der Seitenwand dieser vorbekannten Installationsdose befindliche Intumeszenzmaterial wird bei Erreichen der Temperatur das Doseninnere mit diesem Dämmschichtbildner verfüllt, um zu verhindern, dass insbesondere Heißgase durch die Installationsdose und ihren rückseitigen Öffnungen hohlwandinnenseitig austreten.

Bei dieser vorbekannten Installationsdose trägt der Doseneinsatz Schraubkanäle, in denen in der Installationsdose zu montierende elektrische/elektronische Komponenten, beispielsweise ein Schalter oder eine Steckdose, befestigt werden können. Bei diesem Konzept sind die Dosenkörper und der Inneneinsatz aufeinander abgestimmt. Der Dosenkörper selbst kann nicht ohne Inneneinsatz sinnvoll verwendet werden, da dieser keine Schraubkanäle hat, an denen eine in der Installationsdose zu montierende Komponente befestigt werden kann.

Eine weitere Installationsdose der vorstehend beschriebenen Art ist aus EP 2 472 685 A1 bekannt. Der Intumeszenzeinsatz dieser vorbekannten Installationsdose ist aus einem Kunststoff als Bindemittel gefertigt, in welches zumindest 60 % Intumeszenzgraphit eingearbeitet ist. In einer anderen Ausgestaltung einer solchen, als Brandschutzdose ausgelegten Installationsdose verfügt diese in ihrem Boden über eine Bodenvertiefung, in die ein doseninnenseitig abgedeckter Intumeszenzeinsatz eingelegt ist (DE 20 2017 105 736 U1). Bei dieser Installationsdose wird ausgehend vom Dosenboden bei Erreichen der Reaktionstemperatur den Dosenhohlraum mit dem Dämmschichtbildner verfüllt. Eine solche Anordnung des Intumeszenzmaterials hat jedoch den Nachteil, dass in dem Bereich des Intumeszenzmaterials nebst Abdeckung keine Einführöffnungen vorgesehen sein können. Dies ist jedoch im Bodenbereich oftmals gewünscht.

Ausgehend von diesem diskutierten Stand der Technik liegt der Erfindung die Aufgabe zugrunde, eine Installationsdose vorzuschlagen, mit der im Brandfall die Heißgasdichtigkeit der Installationsdose in kürzerer Zeit erreicht wird.

Gelöst wird diese Aufgabe erfindungsgemäß durch eine eingangs genannte, gattungsgemäße Installationsdose, bei der der oder die Intumeszenzeinsätze jeweils zwischen zwei in Umfangsrichtung voneinander beabstandeten Dosenvorsprüngen angeordnet sind, und bei der der zumindest eine Intumeszenzeinsatz dergestalt in dem Dosenkörper positioniert ist, dass an seinem in Richtung zum Boden des Dosenkörpers weisenden Ende zwischen dem Intumeszenzträger und dem Dosenkörper zumindest abschnittsweise eine oder mehrere Austrittsöffnungen vorhanden sind und/oder in dem Intumeszenzträger begrenzt auf einen sich in Richtung der Tiefe des Dosenkörpers erstreckenden Abschnitt eine oder mehrere Austrittsöffnungen vorgesehen sind.

Diese Installationsdose verfügt über einen oder mehrere Intumeszenzeinsätze, von denen typischerweise jeweils einer zwischen zwei in Umfangsrichtung voneinander beabstandeten Dosenvorsprüngen angeordnet ist. Die Intumeszenzeinsätze folgen dem innenseitigen Seitenwandverlauf des Dosenkörpers. Bei einer Installationsdose mit einer zylindrischen Seitenwand sind der bzw. die Intumeszenzeinsätze entsprechend gekrümmt. Bei in den Dosenkörper eingesetztem Intumeszenzeinsatz befindet sich der Intumeszenzträger doseninnenseitig und das von diesem getragene Intumeszenzmaterial an seiner zur Seitenwand des Dosenkörpers weisenden Seite. Damit befindet sich das Intumeszenzmaterial zwischen der Seitenwand des Dosenkörpers und dem Intumeszenzträger. Der Intumeszenzträger ist typischerweise aus einem elektrisch nicht leitenden Kunststoff, ebenso wie der Dosenkörper hergestellt. Von Besonderheit bei dieser Installationsdose ist, dass das von dem Intumeszenzträger getragene Intumeszenzmaterial in ausgewählten Abschnitten in direktem Kontakt zum Innenvolumen des Dosenkörpers steht. Zu diesem Zweck ist gemäß einer Ausführung der Erfindung vorgesehen, dass zwischen dem Intumeszenzträger an seinem zu dem Boden des Dosenkörpers weisenden Ende und dem Dosenkörper ein Abstand verbleibt. Auf diese Weise ist zumindest über einen Abschnitt des zum Boden weisenden Endes des Intumeszenzträgers eine Austrittsöffnung vorhanden. Typischerweise erstreckt sich diese Öffnung entlang des gesamten unteren Abschlusses des Intumeszenzträgers. Gemäß einer anderen Ausgestaltung oder auch ergänzend zu der vorstehend beschriebenen ist vorgesehen, dass in dem Intumeszenzträger begrenzt auf einen sich in Richtung der Tiefe des Dosenkörpers erstreckenden Abschnitt eine oder mehrere Austrittsöffnungen vorgesehen sind. Diese befinden sich typischerweise im bodenseitigen Endabschnitt des Intumeszenzträgers. Ergänzend oder auch unabhängig davon, dass zum Boden des Dosenkörpers weisend das Intumeszenzmaterial in direktem Kontakt zum Innenvolumen des Dosenkörpers steht oder lediglich durch eine dünne Membran von diesem getrennt ist, können derartige Austrittsöffnungen auch im montageöffnungsseitigen Endabschnitt des Intumeszenzträgers vorgesehen sein. Bei in den Intumeszenzträger eingebrachten Austrittsöffnungen kann es sich um eine oder mehrere Lochreihen handeln, die sich in Umfangsrichtung des Intumeszenzträgers erstrecken. Durchaus können derartige Öffnungen ganz oder teilweise auch als Langlöcher ausgeführt sein.

Das Besondere an dieser Installationsdose mit ihrem zumindest einen solchermaßen gestalteten Intumeszenzeinsatz mit seinem lagigen Aufbau ist, dass der Intumeszenzträger genutzt wird, um den Blähprozess des Intumeszenzmaterials zu lenken, mithin die Ausdehnungsrichtung des unter Temperatureinwirkung blähenden Intumeszenzmaterials zu beeinflussen. Erreicht wird dieses durch die eine oder die mehreren Austrittsöffnungen, da das dahinter befindliche Intumeszenzmaterial - entweder in direkten Kontakt zum Innenvolumen des Dosenkörpers stehend oder nur durch eine dünne Membran von diesem getrennt - bei Eindringen von Heißgasen in die Installationsdose das Intumeszenzmaterial an diesen Stellen durch direkten Wärmekontakt seine Reaktionstemperatur erreicht. Befinden sich die einen oder mehreren Austrittsöffnungen im Bereich des bodenseitigen Abschlusses des Intumeszenzträgers, sei es durch darin vorgesehene Öffnungen oder durch eine Beabstandung des unteren Abschlusses des Intumeszenzträgers vom Dosenkörper füllt den geblähten Dämmschichtbildner zunächst den Bodenbereich des Dosenkörpers und damit denjenigen Bereich, in dem Kabel- und/oder Rohrein- bzw. -ausführungen vorhanden sind. Mit der fortschreitenden Reaktion des Intumeszenzmaterials wird anschließend das gesamte Doseninnere mit dem Dämmschichtbildner gefüllt. Es ist bei dieser Installationsdose somit möglich, die Art und Weise der Ausbreitung des Dämmschichtbildners in der Installationsdose zu beeinflussen.

Steht das von dem Intumeszenzträger getragene Intumeszenzmaterial nicht in unmittelbarem Kontakt zu dem Volumen des Dosenkörpers, sondern ist durch eine Membran abgedeckt, beispielsweise eine Weichkunststoffmembran oder eine entsprechende Ausdünnung des Intumeszenzträgers selbst. Eine Erwärmung des hinter einer solchen Austrittsöffnung befindlichen Intumeszenzmaterials gegenüber einem direkten Kontakt zum Doseninneren ist nicht nennenswert verzögert. Eine solche Membran wird bereits bei relativ geringen Temperaturen zerstört. Diese Installationsdose reagiert auf ein Eindringen von Heißgas somit unmittelbar oder quasi unmittelbar nach Eindringen des Heißgases in das Innere des Dosenkörpers. Bei herkömmlichen Brandschutzeinsätzen wurde das darin gekapselt enthaltene Intumeszenzmaterial erst durch in den Dosenkörper eingedrungenes Heißgas auf seine Reaktionstemperatur erwärmt, nachdem entweder der Intumeszenzträger versagt oder die Wärme des Heißgases durch das Kunststoffmaterial des Intumeszenzträgers hindurch bis zu dem Intumeszenzmaterial transportiert worden ist. Eine als Brandschutzdose ausgelegte Installationsdose wird als umso besser beurteilt, je rascher die durch den durch das aufgeblähte Intumeszenzmaterial gebildeten Dämmschichtbildner bereitgestellte Dichtfunktion erfüllt ist. Dieses gelingt bei der erfindungsgemäßen Installationsdose durch den direkten oder quasi direkten Kontakt des Intumeszenzmaterials zum Doseninneren mit dem Erfolg, dass die Reaktionstemperatur des Intumeszenzmaterials in den hinter der oder den Austrittsöffnungen liegenden Bereichen bereits nach kurzer Zeit, jedenfalls in sehr viel kürzerer Zeit als bei vorbekannten Installationsdosen dieser Art, erreicht wird. Zudem können bei dieser Installationsdose durch das zumindest anfänglich gelenkte Ausbreiten des Dämmschichtbildners zuerst die in Bezug auf eine Dichtigkeit kritischen Stellen im Dosenkörper abgedichtet werden. Dieses dürfte in vielen Fällen der Bodenbereich des Dosenkörpers mit seinen Kabelein- und -ausführungen sein. Durchaus möglich ist auch die Auslegung des oder der Intumeszenzeinsätze, bei der, wenn sich die Austrittsöffnungen im montageöffnungsseitigen Endbereich derselben befinden, der Heißgaszutritt in den Dosenkörper verhindert wird. Die Möglichkeit des Verschlusses des Eingangsbereichs der Montageöffnung durch den Dämmschichtbildner ist jedoch abhängig von der und den in der Installationsdose installierten Komponenten, die mitunter ein vollständiges Verschließen der Eingangsseite des Dosenkörpers blockieren können.

Bei dieser Installationsdose hat man sich über die herrschende Lehre, das Intumeszenzmaterial müsse gegenüber dem Doseninneren vollständig gekapselt sein, gelöst. Dieses ist bei vorbekannten Brandschutzinstallationsdosen der Fall. Bei der erfindungsgemäßen Installationsdose befindet sich das Intumeszenzmaterial aus Blickrichtung vom Doseninneren hinter dem Intumeszenzträger, ist durch dieses also lediglich verblendet, sodass dieses, da in aller Regel elektrisch leitend, durchaus durch den Intumeszenzträger von dem Doseninneren und den darin montierten elektrischen/elektronischen Komponenten getrennt und hinreichend beabstandet ist. Bei in dem Intumeszenzträger vorgesehenen Austrittsöffnungen befindet sich daher vorzugsweise in radialer Richtung fluchtend mit diesen kein Intumeszenzmaterial. Dieses kann mit den Austrittsöffnungen des Intumeszenzträgers fluchtende Durchbrechungen aufweisen. Diese Durchbrechungen sind typischerweise etwas größer ausgeführt als die Austrittsöffnungen, damit das Intumeszenzmaterial hinter den Austrittsöffnungen umfänglich etwas zurückspringt.

Der oder die Intumeszenzeinsätze befinden sich zwischen zwei an den Dosenkörper innenseitig angeformten Dosenvorsprüngen. Hierbei kann es sich um Schraubkanäle oder auch um diejenigen Kanäle handeln, in denen die Spannschrauben zum Verspannen des Dosenkörpers in der Öffnung einer Hohlwand mit der Beplankung vorgesehen ist. Damit wird durch den oder die Intumeszenzeinsätze das Montagevolumen des Dosenkörpers nicht nennenswert reduziert, zumal diese Seitenwandinnenbereiche bei vielen Installationen ungenutzt bleiben.

Vorzugsweise erstrecken sich der oder die Einsätze zwischen zwei derartigen Dosenvorsprüngen und somit von einem ersten bis zu einem zweiten Dosenvorsprung. Dann wird durch einen solchen Intumeszenzeinsatz nicht nur dieser Seitenwandabschnitt insgesamt in der Fläche genutzt, um Intumeszenzmaterial unterzubringen. Vielmehr können dann die Dosenvorsprünge genutzt werden, um an diesen den oder die Intumeszenzeinsätze zu fixieren. Erreicht werden kann dieses beispielsweise dadurch, dass benachbarte Dosenvorsprünge des Dosenkörpers in Bezug auf ihre Längserstreckung im Übergang in die angrenzende Seitenwand, in radialer Richtung wirkend, zumindest abschnittsweise hinterschnitten sind. In diesen Hinterschnitt greift der Intumeszenzträger ein. Eingebracht wird der Intumeszenzeinsatz in diesen Hinterschnitt durch eine translatorische Montagebewegung in Richtung der Längsachse des Dosenkörpers. Diese in radialer Richtung zum Doseninneren hin wirkenden Hinterschnitte sind in Richtung zur Montageöffnung offen. Typischerweise weist eine herkömmliche Installationsdose vier derartiger Dosenvorsprünge auf. Eine solche Installationsdose kann daher mit vier Intumeszenzeinsätzen in der vorbeschriebenen Art und Weise bestückt werden.

Erwähnenswert ist zu dieser Installationsdose zudem, dass der Dosenkörper als eigenständige Installationsdose, namentlich als herkömmliche Installationsdose beispielsweise als Hohlwanddose, eingesetzt werden kann. Wenn eine solche Installationsdose als Brandschutzdose montiert oder nachgerüstet werden soll, werden schlichtweg der oder die Intumeszenzeinsätze eingeschoben. Ein Nachrüsten einer bereits installierten Installationsdose ist, wenn die elektrische/elektronische Installation nicht mit einem Geräteträger am Dosenkörper verschraubt ist, ohne eine Demontage der im Dosenkörper befindlichen Installation möglich.

Wenn gewünscht, kann ein solcher Intumeszenzeinsatz auch mit dem Dosenkörper gefügt sein, beispielsweise durch Verkleben desselben mit dem Dosenkörper oder durch Verschweißen des Intumeszenzträgers mit dem Dosenkörper. Wenn Letzteres vorgesehen ist, ist vorzugsweise an den Intumeszenzträger zumindest eine Schweißfahne angeformt, um den Ort der Fügeverbindung von dem Intumeszenzmaterial zu beabstanden. Schließlich soll durch den Schweißprozess das Intumeszenzmaterial oder Teile desselben durch den Wärmeeintrag nicht auf die Reaktionstemperatur gebracht werden. Eine solche Schweißfahne erstreckt sich typischerweise von der flächigen Erstreckung des Intumeszenzträgers in das Doseninnere hinein. Eine solche Schweißfahne kann beispielsweise durch Ultraschallschweißen mit dem Dosenkörper verbunden werden. Eine solche Fügeverbindung dient vornehmlich dem Zweck, dass aus einer mit einem oder mehreren Intumeszenzeinsätzen bestückten Installationsdose der oder die Einsätze oder einzelne derselben nicht herausgenommen werden können und somit der Manipulationssicherheit. Eine solche Schweißfahne kann beispielsweise in dem Bodenbereich des Dosenkörpers angeordnet sein. In einem anderen Ausführungsbeispiel ist vorgesehen, dass eine solche Schweißfahne im bodenseitigen Endabschnitt des Intumeszenzträgers an seiner zu einem Dosenvorsprung weisenden Seite an diesen angeformt ist. Gefügt wird die Schweißfahne dann mit der Mantelfläche des Dosenvorsprunges. Eine solche Schweißfahne hat vorzugsweise eine Formgebung, dass diese bei in den Dosenkörper eingesetztem Intumeszenzeinsatz auf der Außenseite des Dosenkörpers anliegt, durchaus auch mit einer geringen Vorspannung. Dann braucht beim Fügevorgang die Schweißfahne nicht gegen den Dosenvorsprung mit einem Werkzeug beim Vorgang des Fügens gedrückt zu werden. In einer anderen Ausgestaltung ist vorgesehen, dass an den Intumeszenzträger im Bereich seines zur Montageöffnung der Installationsdose weisenden Abschnittes eine solche Schweißfahne angeformt ist. Vorteilhaft bei dieser Auslegung ist, dass dann im Zusammenhang mit einem Fügen mit Wärmeeintrag mit der Mantelfläche des Dosenvorsprunges die Wärme in einen Bereich des Intumeszenzeinsatzes eingebracht wird, der einen Wärmeeintrag tolerien kann. Ein Wärmeeintrag hat auch keinen Einfluss auf eine Klemmbefestigung des Intumeszenzeinsatzes zwischen zwei in Umfangsrichtung der Installationsdose voneinander beabstandete Dosenvorsprünge.

In vielen Fällen hat der Dosenkörper einer solchen Installationsdose zwischen der umlaufenden Seitenwand, typischerweise zylindrisch, und dem Boden einen gegenüber der Seitenwand geneigten Übergangsabschnitt. In diesem befinden sich typischerweise Einführöffnungen für Kabel. Bei einer solchen Ausgestaltung wird man den oder die Intumeszenzeinsätze bezüglich ihres zum Boden des Dosenkörpers weisenden Abschlusses mit einer solchen Kontur versehen, dass Einfuhröffnungen nicht überdeckt sind. Bei einer Auslegung des Intumeszenzeinsatzes, dass der zum Boden weisende Abschluss seines Intumeszenzträgers von dem Dosenkörper beabstandet ist, endet dieser vor dem Seitenwandübergangsabschnitt. Gleiches gilt entsprechend für den Fall, dass Kabel- und/oder Rohreinführungen in der Seitenwand des Dosenkörpers vorgesehen sind.

Gesteigert werden kann die bezüglich einer Ausbreitung des geblähten Intumeszenzmaterials im Doseninneren durch den Intumeszenzträger bewirkte Lenkung, wenn dieser aus einem Kunststoffmaterial hergestellt ist, das eine hinreichende Formstabilität aufrecht erhält, wenn das Intumeszenzmaterial bereits seine Reaktionstemperatur erreicht hat. Da der Intumeszenzträger typischerweise aus einem Kunststoffmaterial hergestellt ist, wird man für eine solche Ausführung der Installationsdose einen Kunststoff wählen, dessen Erweichungstemperatur zumindest etwas oberhalb der Reaktionstemperatur des Intumeszenzmaterials liegt. Durch die Formstabilität wird über einen längeren Zeitraum die Lenkungswirkung des Intumeszenzträgers gewährleistet, bevor dieser durch eine im Brandfalle zu hohe Wärmeeinwirkung seine diesbezügliche Funktion verliert. Gleiches gilt auch für den Dosenkörper, dessen Seitenwand, soweit nicht an einer Beplankung einer Hohlwand abgestützt, als Widerlager für die Ausbreitung des Dämmschichtbildners dient.

Ein solcher Dosenkörper kann zur Ausbildung einer einem Brandschutz dienenden Installationsdose mit mehreren Intumeszenzeinsätzen der vorbeschriebenen Art bestückt sein. Typischerweise werden derartige Dosenkörper mit zwei oder vier Installationseinsätzen bestückt sein. Gemäß einem Ausführungsbeispiel sind die Intumeszenzeinsätze einer solchen Installationsdose jeweils eigenständige Einsätze. Durchaus möglich ist es, benachbarte Einsätze durch eine Materialbrücke, beispielsweise ausgebildet als Filmscharnier, miteinander zu verbinden, sodass diese sodann als Einheit durch die Montageöffnung eines Dosenkörpers eingeschoben werden können.

Nachfolgend ist die Erfindung anhand von Ausführungsbeispielen unter Bezugnahme auf die beigefügten Figuren beschrieben. Es zeigen:
- **Fig. 1:**: Eine perspektivische Ansicht einer als Brandschutzdose ausgelegten Installationsdose nach Art einer Explosionsdarstellung,
- **Fig. 2:**: die Installationsdose der Figur 1 in einer perspektivischen Darstellung,
- **Fig. 3:**: einen Querschnitt durch die Installationsdose der Figur 2,
- **Fig. 4:**: die Installationsdose der vorstehenden Figuren in einer Schnittdarstellung entsprechend Figur 3, eingebaut in die Beplankung einer Hohlwand mit einer darin montierten elektrischen Komponente,
- **Fig. 5:**: die in die Hohlwand eingesetzte Installationsdose der Figur 4 bei Eindringen von Heißgas infolge eines Brandes durch die elektrische Komponente in das Innere der Installationsdose zu einem Zeitpunkt unmittelbar nach Erreichen der Reaktionstemperatur eines Teils des Intumeszenzmaterials,
- **Fig. 6:**: die Darstellung der Figur 5 in einem weiteren Stadium des Blähens des Intumeszenzmaterials, bei dem die Kabeleinführungen bereits durch geblähtes Intumeszenzmaterial - dem Dämmschichtbildner - abgedichtet sind,
- **Fig. 7:**: in einer perspektivischen Darstellung eine als Brandschutzdose ausgelegte Installationsdose gemäß einem weiteren Ausführungsbeispiel seiner Intumeszenzeinsätze,
- **Fig. 8:**: in einer perspektivischen Darstellung eine als Brandschutzdose ausgelegte Installationsdose gemäß noch einem weiteren Ausführungsbeispiel seiner Intumeszenzeinsätze und
- **Fig. 9:**: eine perspektivische Ansicht einer weiteren erfindungsgemäßen Installationsdose.

Eine Installationsdose 1 für den Einbau von elektrischen und/oder elektronischen Komponenten, die bei dem dargestellten Ausführungsbeispiel als Hohlwanddose ausgebildet ist, umfasst einen Dosenkörper 2 und mehrere Intumeszenzeinsätze 3. Bei dem dargestellten Ausführungsbeispiel wird der Dosenkörper 2 zum Erstellen der Installationsdose 1 mit vier Intumeszenzeinsätzen 3 bestückt.

Bei dem Dosenkörper 2 handelt es sich um eine handelsübliche Hohlwanddose mit einem Boden 4, einer umlaufenden Seitenwand 5 sowie einem Seitenwandübergangsabschnitt 6, der die Seitenwand 5 mit dem Boden 4 verbindet. Der Seitenwandübergangsabschnitt 6 ist der Seitenwand zugehörig und unterscheidet sich von dieser dadurch, dass in diesem Abschnitt sich die Seitenwand 5 konisch in Richtung zum Boden 5 verjüngt. In dem Seitenwandübergangsabschnitt 6 sind mehrere Einführöffnungen für Kabel vorgesehen, die zur Bereitstellung der geforderten Luftdichtigkeit mit einer Weichkunststoffmembran überspannt sind. Die Seitenwand 5 fasst an ihrem dem Boden 4 gegenüberliegenden Ende eine Montageöffnung 7 ein. Bei Nichtbenutzung der Installationsdose 1 ist diese typischerweise mit einem Deckel verschlossen. Der Dosenkörper 2 verfügt wie herkömmliche Hohlwanddosen über Spannschrauben 8, die jeweils in einem Spannschraubenkanal 9 befindlich sind. Die Spannschrauben 8 dienen mit ihrem Klemmplättchen 10 zum Festsetzen des Dosenkörpers 2 in der Beplankung einer Hohlwand. Die Spannschraubenkanäle 9 bilden doseninnenseitig mit ihrer Mantelfläche Dosenvorsprünge 11. Angeformt an die Innenseite der Seitenwand 5 trägt diese zudem zwei Schraubkanalgruppen 12. Bei dem dargestellten Ausführungsbeispiel ist in den mittleren Schraubkanal jeder Schraubkanalgruppe 12 eine Schraube eingesetzt. Die Schraubkanalgruppen 12 verfügen jeweils über drei nebeneinander liegende Schraubkanäle. Durch jede Schraubkanalgruppe 12 ist wiederum jeweils ein Dosenvorsprung 13 gebildet. Die Dosenvorsprünge 11 - einerseits - und die Dosenvorsprünge 13 - andererseits - sind einander zur Mittellängsachse des Dosenkörpers 2 diametral gegenüberliegend angeordnet.

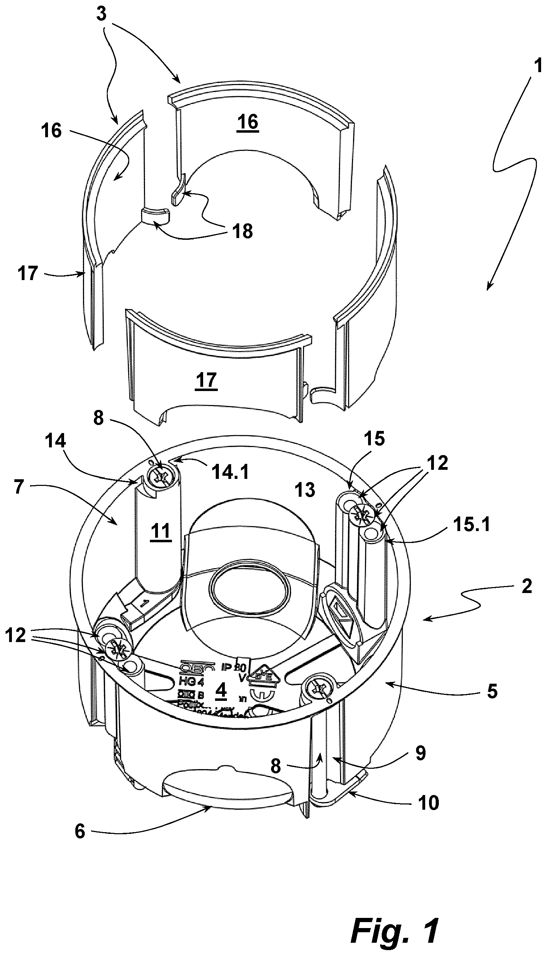

Der Dosenvorsprung 11 ist im Bereich seines montageöffnungsseitigen Endes im Übergang zur Seitenwand 5 jeweils mit einem in radialer Richtung wirkenden Hinterschnitt 14, 14.1 ausgeführt. Auch die Dosenvorsprünge 13 sind in Umfangsrichtung weisend in gleicher Weise hinterschnitten. An dem in Figur 1 rechten Dosenvorsprung 13 sind diese beiden Hinterschnitte mit den Bezugszeichen 15, 15.1 kenntlich gemacht.

Die Intumeszenzeinsätze 3 sind prinzipiell gleich aufgebaut, auch wenn diese sich bezüglich der Kontur ihres unteren, zum Boden 4 weisenden Abschlusses unterscheiden. Jeder Intumeszenzeinsatz 3 ist bereitgestellt durch einen Intumeszenzträger 16, der rückseitig und somit zur Seitenwand 5 weisend jeweils eine Aufnahme zur Aufnahme von Intumeszenzmaterial 17 hat. Diese Aufnahmen sind in Umfangsrichtung und in Richtung zur Montageöffnung durch den Intumeszenzträger 16 begrenzt, unterseitig und damit zum Boden 4 weisend jedoch geöffnet. Der Intumeszenzträger 16 ist aus einem nicht leitenden Kunststoff hergestellt. Jeder Intumeszenzeinsatz 3 dieses Ausführungsbeispiels trägt eine an seinen Intumeszenzträger 16 angeformte Schweißfahne 18, mit der der jeweilige Intumeszenzeinsatz 3 mit dem Dosenkörper verschweißt werden kann. Die Intumeszenzeinsätze 3 folgen hinsichtlich ihrer Formgebung - im vorliegenden Fall mit ihrer Krümmung - dem Verlauf der Seitenwand 5. Angeordnet werden die Intumeszenzeinsätze 3 jeweils zwischen zwei Dosenvorsprüngen 11, 13.

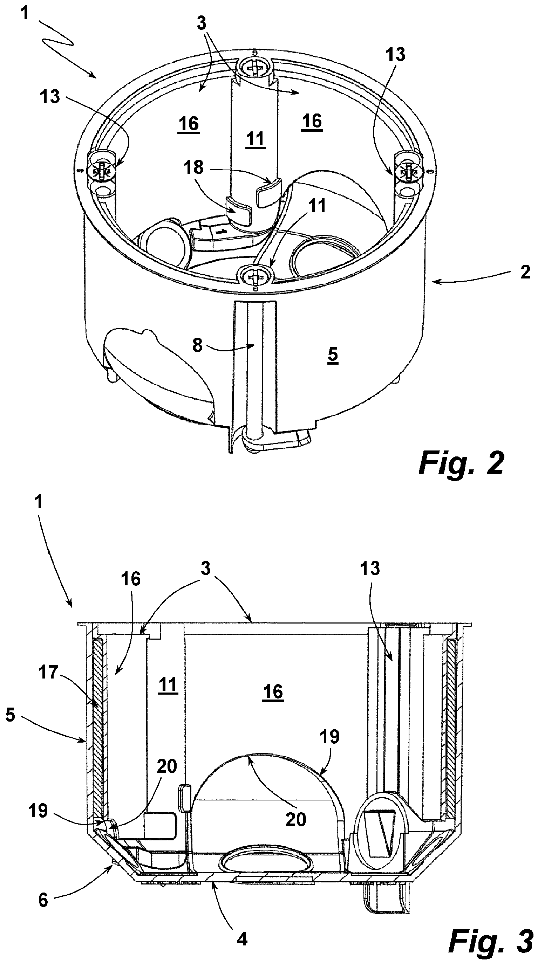

Die Installationsdose 1 mit den in den Dosenkörper 2 eingesetzten Intumeszenzeinsätzen 3 ist in Figur 2 gezeigt. Die Intumeszenzträger 16 greifen mit ihren zu den Dosenvorsprüngen 11, 13 weisenden Kanten bzw. Schmalseiten in die durch die Dosenvorsprünge 11, 13 gebildeten Hinterschnitte 14, 14.1, 15, 15.1 ein. Auf diese Weise sind die Intumeszenzeinsätze 3 innerhalb des Dosenkörpers 3 gehalten. Durchaus möglich ist die Ausgestaltung der Intumeszenzeinsätze 3 auch dergestalt, dass die zu den Dosenvorsprüngen 11, 13 weisenden Kanten in Richtung zum Boden 4 hin, zumindest in einem Abschnitt verjüngt sind, um mit dem in Umfangsrichtung längeren Abschnitt den jeweiligen Intumeszenzeinsatz 3 in Umfangsrichtung in eine gewisse Vorspannung zu stellen.

Bei dem in den Figuren dargestellten Ausführungsbeispiel liegen die Schweißfahnen 18 aufgrund ihrer Formgebung komplementär zur Mantelfläche des Dosenvorsprungs 11 an dieser an. Die Schweißfahnen 18 befinden sich im Bereich des bodenseitigen Endabschnittes des jeweiligen Intumeszenzeinsatzes 3, wobei die Schweißfahnen 18 benachbarter Intumeszenzeinsätze 3 in Richtung der Längserstreckung eines Dosenvorsprungs 11 versetzt zueinander angeordnet sind (siehe Figur 2). Die Schweißfahnen 18 können zum dauerhaften Befestigen der Intumeszenzeinsätze 3 innerhalb des Dosenkörpers 2 mit dem Dosenvorsprung 11 verschweißt, typischerweise ultraschallverschweißt werden.

In dem in Figur 3 gezeigten Querschnitt durch die Installationsdose 1 ist die Anordnung der Intumeszenzeinsätze 3 innerhalb des Dosenkörpers 2 erkennbar. Diese Darstellung verdeutlicht, dass das Intumeszenzmaterial 17 nach Art eines Sandwichaufbaus zwischen der Seitenwand 5 des Dosenkörpers 2 und dem jeweiligen Intumeszenzträger 16 angeordnet ist. Von Besonderheit bei den Intumeszenzeinsätzen 3 ist, dass der untere Abschluss 19 der Intumeszenzträger 16 von dem Dosenkörper 2, hier: Von dem Seitenwandübergangsabschnitt 6, beabstandet ist. Dieses gilt gleichermaßen für Einführöffnungen zum Einführen von Kabeln oder Rohren, die bei der Installationsdose 1 in an sich bekannter Weise mit einer Weichkunststoffmembran überspannt sind. Durch die Beabstandung des unteren Abschlusses 19 der Intumeszenzträger 16 von dem Dosenkörper 2 ist in Bezug auf das Intumeszenzmaterial 17 eine Austrittsöffnung 20 bereitgestellt. Diese erstreckt sich bei dem dargestellten Ausführungsbeispiel entlang des gesamten in Richtung zum Boden 4 weisenden Abschlusses 19 jedes Intumeszenzeinsatzes 3. Das Intumeszenzmaterial 17 ist gegenüber dem unteren Abschluss 19 des Intumeszenzträgers 16 etwas zurückversetzt. Damit ist das elektrisch leitende Intumeszenzmaterial 17 hinreichend von dem Volumen des Dosenkörpers 2 und dem oder den darin montierten elektrischen/elektronischen Komponenten getrennt. Somit steht durch die Austrittsöffnung 20 die in Richtung zum Boden 4 weisende Stirnseite des Intumeszenzmaterials 17 jedes Intumeszenzeinsatzes 3 in direktem Kontakt mit dem Volumen des Dosenkörpers 2.

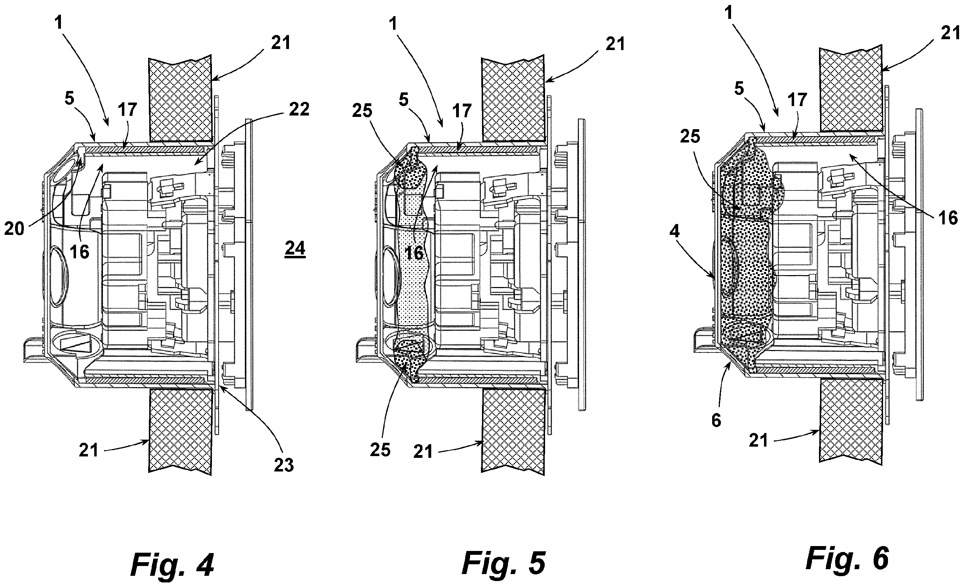

Figur 4 zeigt die Installationsdose 1 in einer Schnittdarstellung entsprechend derjenigen der Figur 3, eingesetzt in die Beplankung 21 einer im Übrigen nicht näher dargestellten Hohlwand. Montiert ist in der Installationsdose 1 als beispielhafte elektrische Komponente eine Steckdose 22. Diese ist mit ihrem Geräteträger 23 an jeweils einem Schraubkanal der Schraubkanalgruppen 12 festgelegt. Die Raumseite ist in dieser Figur mit dem Bezugszeichen 24 kenntlich gemacht.

Die Funktionsweise der als Brandschutzdose ausgelegten Installationsdose 1 ist nachfolgend anhand der Figuren 5 und 6 beschrieben. Figur 5 zeigt die Einbausituation der Installationsdose entsprechend der Darstellung der Figur 4. In dem Raum ist ein Brand ausgebrochen. Heißgase dringen durch die Steckdose 22 in das Innere der Installationsdose 1 ein. Dieses bewirkt, dass die durch den Brand erzeugten Heißgase direkt durch die Austrittsöffnungen 20 in Kontakt mit dem Intumeszenzmaterial 17 gelangen. Hat das mit seiner Stirnseite zur Austrittsöffnung 20 weisende Intumeszenzmaterial 17 in diesem Endabschnitt seine Reaktionstemperatur erreicht, bläht sich dieses auf und tritt durch die Austrittsöffnung 20 aus. Da die in die Installationsdose 1 eingetretenen Heißgase das Intumeszenzmaterial 17 unmittelbar anströmen, reagiert dieses quasi spontan mit Aufblähen und der Bereitstellung des gewünschten Dämmschichtbildners. Figur 5 zeigt das Austreten von geblähtem Intumeszenzmaterial 25 - dem Dämmschichtbildner - aus den Austrittsöffnungen 20 unmittelbar, nachdem die Reaktionstemperatur in dem zur Austrittsöffnung 20 weisenden Endabschnitt des Intumeszenzmaterials 17 erreicht ist. Die Reaktionstemperatur ist abhängig von dem eingesetzten Intumeszenzmaterial 17. Bei dem dargestellten Ausführungsbeispiel ist ein Intumeszenzmaterial gewählt worden, welches bei etwa 180°C seine Reaktionstemperatur hat. Das Material des Intumeszenzträgers 16 ist bei diesen Temperaturen noch nicht so weit erweicht, dass dieses seine Formstabilität verliert. Daher dient der Intumeszenzträger 16 zum definierten Lenken des geblähten Intumeszenzmaterials in das Innere des Dosenkörpers 2. Unterstützt wird dieses durch die Krümmung des Intumeszenzträgers 16, durch die dieser eine zusätzliche Stabilität in radialer Richtung zum Doseninneren hin zu eigen hat. Bei dem dargestellten Ausführungsbeispiel bleibt aus diesem Grunde die gewünschte, den Dämmschichtbildner lenkende Funktion des Intumeszenzträgers 16 bis zu einer Temperatur von etwa 220°C - 230°C erhalten und somit bis zu einer Temperatur, die etwas oberhalb der Materialerweichungstemperatur liegt. Wenn als Material für den Intumeszenzträger 16 ein wärmestabileres Kunststoffmaterial eingesetzt wird, liegt diese Temperatur entsprechend höher.

Infolge des gelenkten Austritts des durch das Blähen des Intumeszenzmaterials 17 bereitgestellten Dämmschichtbildners bedeckt dieses zunächst den Seitenwandübergangsabschnitt 6 und anschließend den Boden 4. Damit wird bei der Installationsdose 1 zuallererst derjenige Bereich des Dosenkörpers 2 im Brandfalle abgedichtet, der die Leitungsein- bzw. -ausführungen aufweist. Auf diese Weise ist Sorge dafür getragen, dass im Brandfalle zuallererst die potenziell undichten Stellen, durch die Heißgas in den Zwischenwandhohlraum gelangen könnte, abgedichtet werden. Der in das Doseninnere quillende Dämmschichtbildner 25 ist in Figur 6 gezeigt. Dieser hat bereits den Boden 4 erreicht und insgesamt den Dosenkörper 2 in Richtung seiner Tiefe bis zum Beginn der zylindrischen Seitenwand 5 gefüllt. Beim weiteren Blähen des Intumeszenzmaterials 17 wird der gesamte, im Inneren des Dosenkörpers 2 verbliebene Hohlraum gefüllt. Sind die in den Dosenkörper 2 eindringenden Heißgase hinreichend heiß und der Intumeszenzträger 16 des jeweiligen Intumeszenzeinsatzes 3 hinreichend temperaturgeschwächt bzw. aufgeschmolzen, bläht sich das verbliebene Intumeszenzmaterial 17 auch in radialer Richtung zum Doseninneren auf.

Geschützt ist bei der in den Figuren dargestellten Installationsdose 1 durch die besonders frühzeitige Bodenabdichtung nicht nur der Hohlwandzwischenraum, sondern insbesondere auch eine Installationsdose, die Rücken an Rücken mit der Installationsdose 1 verbaut ist. Sollten in eine solche zweite Installationsdose, die Rücken an Rücken zu der Installationsdose 1 verbaut ist, Heißgase durch eine Rohr- oder Kabeleinführung eintreten, reagieren auch die darin befindlichen Intumeszenzeinsätze in gleicher Weise wie dieses vorstehend zu der Installationsdose 1 beschrieben ist. Mithin wird auch bei dieser benachbarten Installationsdose unverzüglich derjenige Bereich durch den geblähten Dämmschichtbildner abgedichtet, durch den Heißgase in den benachbarten Raum eintreten könnten.

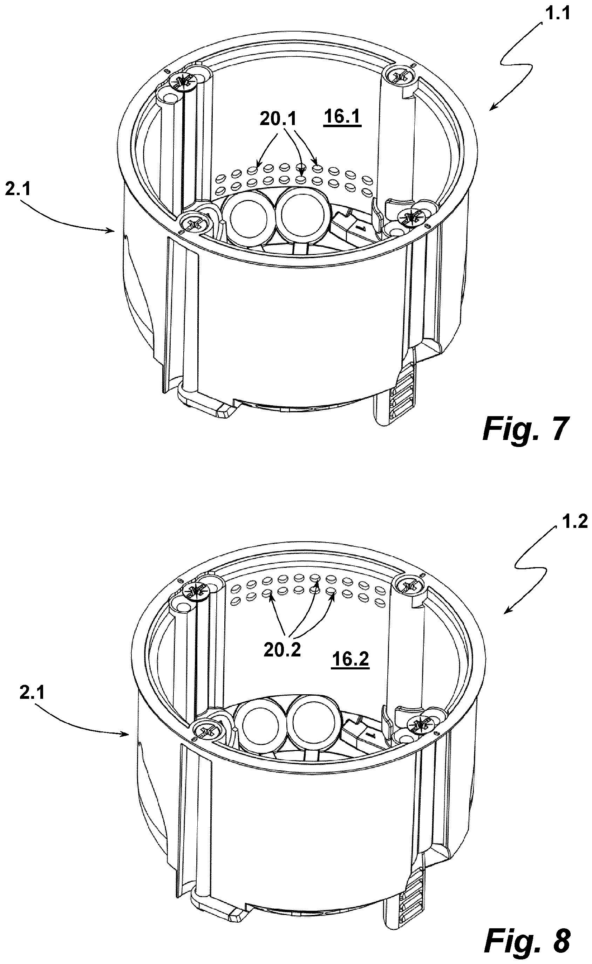

Das vorstehend anhand der Installationsdose 1 beschriebene Lenkungsprinzip des aufblähenden Intumeszenzmaterials 17 kann auch erreicht werden, wenn anstelle einer unterseitigen Austrittsöffnung 20 der Intumeszenzträger 16.1 Austrittsöffnungen 20.1 aufweist, wie dieses in Figur 7 anhand der Installationsdose 1.1 gezeigt ist. Bei einer solchen Ausgestaltung kann sich der Intumeszenzträger 16 mit seinem zum Boden weisenden Abschluss durchaus bis an den Dosenkörper 2.1 erstrecken.

In einer anderen Ausgestaltung einer Installationsdose 1.2 sind in den Intumeszenzträger 16.2 an seinem eingangsseitig bezüglich des Dosenkörpers 2.2 befindlichen Endabschnitt Austrittsöffnungen 20.2 eingebracht (siehe Figur 8). Bei dieser Installationsdose 1.2 wird ein anderes Abdichtungskonzept verfolgt. Bei dieser soll zuerst ihr Eingang abgedichtet werden.

Die Austrittsöffnungen 20.1, 20.2 sind bei dem dargestellten Ausführungsbeispiel durch Lochreihen, wie aus den Figuren 7 und 8 erkennbar, bereitgestellt.

Durchaus besteht die Möglichkeit, unterschiedliche Arten der vorstehend beschriebenen Lenkungsstrukturen miteinander zu vereinen.

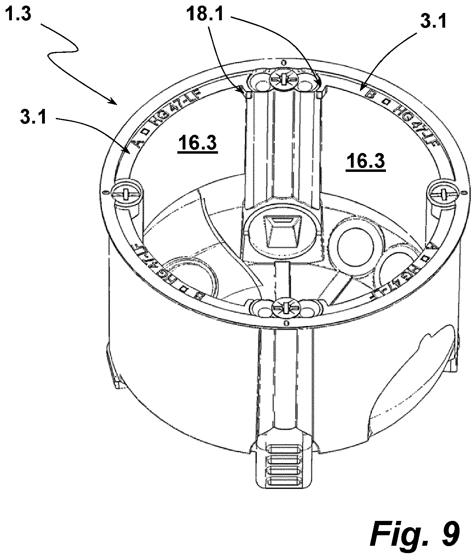

Die Figur 9 zeigt in einer perspektivischen Ansicht entsprechend derjenigen der Installationsdose 1 der Figur 2 eine weitere Ausgestaltung der darin eingesetzten Intumeszenzeinsätze 3.1. Diese unterscheiden sich von den Intumeszenzeinsätzen 3 des Ausführungsbeispiels der Figuren 1 bis 6 nur durch die Anordnung ihrer Schweißfahnen. Bei der Installationsdose 1.3 ist an jeden Intumeszenzträger 16.3 seiner Intumeszenzeinsätze 3.1 eine Schweißfahne 18.1 in seinem zur Montageöffnung der Installationsdose 1.3 weisenden Endabschnitt angeformt. Eine solche Schweißfahne 18.1 schmiegt sich ebenso wie die Schweißfahne 18 des zuvor beschriebenen Ausführungsbeispiels an die Mantelfläche des in Figur 9 gezeigten Dosenvorsprunges an.

Im Übrigen sind die Intumeszenzeinsätze 3.1 genauso aufgebaut wie die Intumeszenzeinsätze 3 mit ihren Intumeszenzträgern 16. Die diesbezüglichen Ausführungen gelten somit gleichermaßen für die Intumeszenzeinsätze 3.1 des Ausführungsbeispiels der Figur 9.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten diese auszuführen, ohne dass diese im Rahmen dieser Ausführungen im Einzelnen näher beschrieben werden müssten.

### Bezugszeichenliste

- 1, 1.1, 1.2, 1.3: Installationsdose
- 2, 2.1, 2.2: Dosenkörper
- 3, 3.1: Intumeszenzeinsatz
- 4: Boden
- 5: Seitenwand
- 6: Seitenwandübergangsabschnitt
- 7: Montageöffnung
- 8: Spannschraube
- 9: Spannschraubenkanal
- 10: Klemmplättchen
- 11: Dosenvorsprung
- 12: Schraubkanalgruppe
- 13: Dosenvorsprung
- 14, 14.1: Hinterschnitt
- 15, 15.1: Hinterschnitt
- 16, 16.1, 16.2, 16.3: Intumeszenzträger
- 17: Intumeszenzmaterial
- 18, 18.1: Schweißfahne
- 19: unterer Abschluss
- 20, 20.1, 20.2: Austrittsöffnung
- 21: Beplankung
- 22: Steckdose
- 23: Geräteträger
- 24: Raumseite
- 25: geblähtes Intumeszenzmaterial/Dämmschichtbildner

## Patentansprüche

1. Installationsdose zum Installieren von elektrischen und/oder elektronischen Komponenten, umfassend einen Dosenkörper (2, 2.1, 2.2) mit einem Boden (4) und einer umlaufenden Seitenwand (5) sowie eine von der Seitenwand (5) eingefassten Montageöffnung (7), welche Seitenwand (5) innenseitig mehrere, sich in Richtung der Tiefe des Dosenkörpers erstreckende, rippenartige Dosenvorsprünge trägt, wobei die Installationsdose (1, 1.1, 1.2, 1.3) ferner über zumindest einen Intumeszenzeinsatz (3, 3.1) mit einem lagigen Aufbau, bereitgestellt durch einen Intumeszenzträger (16, 16.1, 16.2, 16.3) als erste Lage und daran an einer Seite angeschlossenes Intumeszenzmaterial (17) als weitere Lage, verfügt, der dem innenseitigen Seitenwandverlauf in Umfangsrichtung des Dosenkörpers (2, 2.1, 2.2) folgt, wobei sich der Intumeszenzträger (16, 16.1, 16.2, 16.3) dosenkörperinnenseitig und das Intumeszenzmaterial (17) an der zur Seitenwand (5) des Dosenkörpers (2, 2.1, 2.2) weisenden Seite des Intumeszenzträgers (16, 16.1, 16.2) befinden, **dadurch gekennzeichnet, dass** der oder die Intumeszenzeinsätze (3, 3.1) jeweils zwischen zwei in Umfangsrichtung voneinander beabstandeten Dosenvorsprüngen (11, 13) angeordnet sind, und dass der zumindest eine Intumeszenzeinsatz (3) dergestalt in dem Dosenkörper (2, 2.1, 2.2) positioniert ist, dass an seinem in Richtung zum Boden des Dosenkörpers (2, 2.1, 2.2) weisenden Ende zwischen dem Intumeszenzträger (16, 16.1, 16.2, 16.3) und dem Dosenkörper (2, 2.1, 2.2) zumindest abschnittsweise eine oder mehrere Austrittsöffnungen (20) vorhanden sind und/oder in dem Intumeszenzträger begrenzt auf einen sich in Richtung der Tiefe des Dosenkörpers erstreckenden Abschnitt eine oder mehrere Austrittsöffnungen (20.1, 20.2) vorgesehen sind.

2. Installationsdose nach Anspruch 1, **dadurch gekennzeichnet, dass** die Dosenvorsprünge (11, 13) des Dosenkörpers (2, 2.1, 2.2) in Bezug auf ihre Längserstreckung am Übergang in die Seitenwand (5) in radialer Richtung wirkend zumindest in einem Abschnitt hinterschnitten sind, dass der Intumeszenzeinsatz (3, 3.1) sich zwischen zwei Dosenvorsprüngen (11, 13) erstreckt und mit seinem Intumeszenzträger (16, 16.1, 16.2, 16.3) in den oder die Hinterschnitte (14, 14.1, 15, 15.1) der benachbarten Dosenvorsprünge eingreift.

3. Installationsdose nach Anspruch 1 oder 2, **dadurch gekennzeichnet, dass** der zumindest eine Intumeszenzeinsatz (3) wenigstens eine an seinem Intumeszenzträger (16, 16.1, 16.2, 16.3) angeformte Schweißfahne (18, 18.1) trägt, mit dem dieser mit dem Dosenkörper (2, 2.1, 2.2) stoffschlüssig etwa durch Schweißen verbindbar oder verbunden ist.

4. Installationsdose nach Anspruch 3, **dadurch gekennzeichnet, dass** an den Intumeszenzträger (16, 16.1, 16.2, 16.3) eine Schweißfahne (18) an einer zu einem Dosenvorsprung (11) weisenden Seite angeformt ist und die Schweißfahne (18, 18.1) geformt ist, um an der Mantelfläche eines der beiden benachbarten Dosenvorsprünge (11) anzuliegen.

5. Installationsdose nach Anspruch 4, **dadurch gekennzeichnet, dass** die Schweißfahnen in dem zur Montageöffnung (7) weisenden Endabschnitt des Intumeszenzträgers (16, 16.1, 16.2) an diesen angeformt sind.

6. Installationsdose nach einem der Ansprüche 1 bis 5, **dadurch gekennzeichnet, dass** die zum Boden (4) des Dosenkörpers (2) weisende Kante des Intumeszenzmaterials (17) zumindest weitgehend nicht durch den Intumeszenzträger (16, 16.3) verblendet ist.

7. Installationsdose nach einem der Ansprüche 1 bis 6, **dadurch gekennzeichnet, dass** die Seitenwand (5) in Richtung zum Boden (4) des Dosenkörpers (2) in einen Seitenwandübergangsabschnitt (6) übergeht, durch welchen Seitenwandübergangsabschnitt (6) der Durchmesser des Dosenkörpers (2) im Bereich der Seitenwand (5) auf denjenigen des Bodens (4) reduziert wird, und dass der bodenseitige Abschluss (19) des zumindest einen Intumeszenzeinsatzes (16, 16.3) mit Abstand zu dem Seitenwandübergangsabschnitt (6) angeordnet ist, sodass zwischen dem Intumeszenzträger (16, 16.3) und dem Seitenwandübergangsabschnitt (6) eine Austrittsöffnung (20) vorhanden ist.

8. Installationsdose nach einem der Ansprüche 1 bis 7, **dadurch gekennzeichnet, dass** der Intumeszenzträger (16.1) im Bereich seines zum Boden des Dosenkörpers (2.1) weisenden Endabschnittes mehrere, in Umfangsrichtung in zumindest einer Reihe angeordnete Austrittsöffnungen (20.1) aufweist.

9. Installationsdose nach einem der Ansprüche 1 bis 8, **dadurch gekennzeichnet, dass** der Intumeszenzträger (16.2) im Bereich seines zur Montageöffnung des Dosenkörpers (2.2) weisenden Endabschnitt mehrere, in Umfangsrichtung in zumindest einer Reihe angeordnete Austrittsöffnungen (20.2) aufweist.

10. Installationsdose nach einem der Ansprüche 1 bis 9, **dadurch gekennzeichnet, dass** die in dem Intumeszenzträger vorgesehenen Austrittsöffnungen durch eine Membran verschlossen sind.

11. Installationsdose nach einem der Ansprüche 1 bis 10, **dadurch gekennzeichnet, dass** das Material des Intumeszenzträgers (16, 16.1, 16.2, 16.3) bis zu einer Temperatur, die höher ist als die Reaktionstemperatur des Intumeszenzmaterials (17), eine hinreichende Formstabilität aufweist, damit bei Erreichen der Reaktionstemperatur des Intumeszenzmaterials (17) die Richtung des Aufblähens durch den Intumeszenzträger (16, 16.1, 16.2, 16.3) gelenkt ist, damit der Dämmschichtbildner (25) durch den oder die Austrittsöffnungen (20, 20.1, 20.2) austritt.

12. Installationsdose nach einem der Ansprüche 1 bis 11, **dadurch gekennzeichnet, dass** das Material des Dosenkörpers (2, 2.1, 2.2) bis zu einer Temperatur, die höher ist als die Reaktionstemperatur des Intumeszenzmaterials (17), eine hinreichende Formstabilität aufweist, um zumindest zu Beginn des Blähprozesses als Widerlager für das Aufblähen des Intumeszenzmaterials (17) zu dienen.

13. Installationsdose nach einem der Ansprüche 1 bis 12, **dadurch gekennzeichnet, dass** der Dosenkörper (2, 2.1, 2.2) vier Dosenvorsprünge (11, 13) aufweist und die Installationsdose (1, 1.1, 1.2, 1.3) mit mehreren Intumeszenzeinsätzen (3, 3.1) bestückt ist.

14. Installationsdose nach einem der Ansprüche 1 bis 13, **dadurch gekennzeichnet, dass** der oder die Intumeszenzeinsätze (3, 3.1) durch Ausüben einer translatorischen Montagebewegung in den Dosenkörper (2, 2.1, 2.2) einzusetzen sind.
